# EUROPÄISCHE PATENTSCHRIFT

(11) **EP 1 916 028 B1**
(45) Veröffentlichungstag und Bekanntmachung des Hinweises auf die Patenterteilung: **03.04.2013**
(21) Anmeldenummer: 07019225.7
(22) Anmeldetag: 29.09.2007
(51) Int. Cl.: B01D 53/10, B01D 53/38, B01J 20/02, B01J 20/20, B01J 20/04

(54) **Verfahren zur trockenen Reinigung von Abgasen aus metallurgischen oder sekundärmetallurgischen Prozessen**
Method for dry cleaning exhaust gases from metallurgy or secondary metallurgy processes
Procédé d'épuration par voie sèche de gaz d'échappement sous la forme de processus métallurgiques ou métallurgiques secondaires

(30) Priorität: 26.10.2006 DE 102006050986
(43) Veröffentlichungstag der Anmeldung: 30.04.2008
(73) Patentinhaber: RWE Power Aktiengesellschaft, 45128 Essen (DE)
(72) Erfinder: Heschel, Wolfgang, 09599 Freiberg (DE); Meyer, Bernd, 09599 Freiberg (DE); Werner, Maik, 38642 Goslar (DE); Wirling, Jürgen, 50354 Hürth (DE)
(74) Vertreter: Polypatent

(56) Entgegenhaltungen:
- EP-A- 1 025 894
- DE-A1- 19 936 930
- GB-A- 441 033
- US-A- 1 563 924

## Beschreibung

Die Erfindung betrifft ein Verfahren zur trockenen Reinigung von Abgasen aus metallurgischen oder sekundärmetallurgischen Prozessen, bei welchen pulverförmige Sorbentien, umfassend Braunkohlenkoks und/oder Aktivkohle mit dem Abgasstrom in Kontakt gebracht werden.

Insbesondere Abgase aus sekundärmetallurgischen Schmelzanlagen sind häufig mit organischen Schadstoffen, beispielsweise polyhalogenierten Dibenzodioxinen oder polyhalogenierten Dibenzofuranen belastet. Es ist bekannt, dass sich solche Schadstoffe besonders gut mit kohlenstoffhaltigen Sorbentien aus dem Abgas entfernen lassen. Ein besonders geeignetes Verfahren hierzu ist die Flugstromadsorption, wobei ein pulverförmiges Adsorbens direkt in den Abgasstrom dosiert wird und anschließend zusammen mit den im Abgasstrom mitgeführten Prozessstäuben in Filteranlagen abgeschieden wird. Ein solches Verfahren ist beispielsweise in der DE 199 40 683 beschrieben.

Braunkohlenkokse und Aktivkohlen sind aufgrund ihres reaktionsträgen Verhaltens in der Regel auch bei hohen Abgastemperaturen sicher in der vorstehend beschriebenen Art und Weise einsetzbar.

Abgase von metallurgischen und sekundärmetallurgischen Anlagen enthalten jedoch häufig katalytisch wirksame Prozessstäube. Diese Prozessstäube können kohlenstoffoxidierende Metallkatalysatoren enthalten. Es kann daher beim Einsatz von kohlenstoffhaltigen Sorbentien in Mischung mit den katalytisch wirksamen Prozessstoffen zu einer erhöhten Entzündungsneigung des in Filteranlagen abgeschiedenen Staubes kommen. Es ist daher in der Regel notwendig, die Reaktivität der kohlenstoffhaltigen Filterstäube so weit zu senken, dass ein in dieser Hinsicht gefahrloser Einsatz kohlenstoffhaltiger Sorbentien zur Reinigung von Abgasen aus metallurgischen oder sekundärmetallurgischen Anlagen möglich wird.

In der DE 199 40 683 A1 ist beispielsweise ein Verfahren zur trockenen Reinigung von Abgasen aus Sinteranlagen, Hüttenwerken oder sekundärmetallurgischen Schmelzanlagen bekannt, bei dem pulverförmige Sorbentien unter Verwendung von Koks aus Braunkohle mit dem Abgasstrom in Kontakt gebracht werden. Dabei findet eine Mischung aus Braunkohlenkoks und Zeolithen als zusätzliche oberflächenaktive Bestandteile Anwendung. Das Mischungsverhältnis zwischen dem Braunkohlenkoks und Zeolith wird in Abhängigkeit von Art, Zusammensetzung und Menge des im Abgas enthaltenen Prozessstaubes so eingestellt, dass eine Inertisierung der Feststoffe gewährleistet ist.

Ein Nachteil dieses bekannten Verfahrens ist, dass die Reaktivität des jeweiligen Prozessstaubes im Vorhinein bekannt sein muss, um die erforderliche Menge an inertem mineralischem Zuschlagstoff festlegen zu können.

Ein Verfahren der eingangs genannten Art sind beispielsweise aus der EP 1 025 894 B1 bekannt. In der EP 1 025 894 B1 wird vorgeschlagen, dem Abgasstrom zusätzlich zu den Kohlenstoffsorbentien Amine oder Harnstoffe als Katalysationsinhibitoren zuzugeben. Diese werden parallel zu dem Koksstaub in den Abgasstrom eingedüst.

Das Verfahren besitzt den Vorzug, dass die Katalysationsinhibitoren in signifikant geringeren Mengen zugegeben werden können als nichtreaktive Substanzen, wie es beispielsweise Zeolithe sind. Das Verfahren ist allerdings ebenfalls mit dem Nachteil behaftet, dass die Zusammensetzung des metallurgischen Prozessstaubes und dessen katalytische Aktivität bekannt sein müssen, um eine wirksame Inertisierung der Mischung aus Prozessstaub und Sorbentien zu erzielen.

Aus der DE 199 36 930 A1 sind ein Verfahren und eine Vorrichtung zur Abtrennung von Quecksilber aus heißen Pyrolysegasen bekannt. Zur Abscheidung von metallischem Quecksilber aus heißen Pyrolysegasen von Abfallstoffen werden Quecksilber bindende Stoffe in das Pyrolysegas eingebracht, die feste Quecksilberverbindungen liefern. Diese werden an Feinstaubfiltern abgeschieden. Als Quecksilber bindende Stoffe werden in der DE 199 36 930 A1 Schwefel, mit Schwefel dotierte Aktivkohlen, Herdofenkokse, Bentonite, Zeolithe, Trasse und/oder Ziegelmehle, Schwefel abgebende Stoffe, wie Natriumthiosulfat sowie Schwefelsäure, Flußsäure und Salzsäure vorgeschlagen. Ziel des in der

DE 199 36 930 A1 beschriebenen Verfahrens ist es, Quecksilber aus dem Pyrolysegas soweit auszuhalten, dass dieses in der Kraftwerksfeuerung verwendbar ist.

Der Erfindung liegt die Aufgabe zugrunde, ein Verfahren für die Durchführung des Verfahrens bereitzustellen, mit dem die Entzündungsneigung kohlenstoffhaltiger Filterstäube mit geringem Aufwand und höherer Effektivität reduziert werden können. Insbesondere soll dies ohne eingehende Kenntnis der genauen Zusammensetzung des Prozessstaubes möglich sein.

Die Aufgabe wird zunächst durch ein Verfahren zur trockenen Reinigung von Abgasen aus metallurgischen oder sekundärmetallurgischen Prozessen gelöst, bei welchen pulverförmige Sorbentien umfassend Braunkohlenkoks und/oder Aktivkohle mit dem Abgasstrom in Kontakt gebracht werden, welches sich dadurch auszeichnet, dass dem Abgasstrom mit den Sorbentien Substanzen beigegeben werden, die oberhalb einer Temperatur von etwa 100°C bei Anwesenheit von Alkalichloriden Katalysatorgifte für Metallkatalysatoren freisetzen. Grundsätzlich wird zwischen Katalysatorgiften und Katalysationsinhibitoren unterschieden. Katalysatorgifte sind gewöhnlich Substanzen, deren Interaktivität mit den Katalysatoren sehr stark und irreversibel ist, wohingegen Katalysatorinhibitoren grundsätzlich reversibel von der Katalysatorfläche adsorbiert werden.

Die Erfindung kann dahingehend zusammengefasst werden, dass erfindungsgemäß mit den Sorbentien dem Abgasstrom Substanzen aufgegeben werden, die in Kontakt mit dem Prozessstaub und ausschließlich bei Temperaturen oberhalb der für Flugstromadsorberanlagen üblichen Betriebstemperaturen von etwa 100°C bis 150°C aber unterhalb der Entzündungstemperatur des Kohlenstoffadsorbens bei etwa 400°C durch Reaktion mit Inhaltsstoffen des Prozessstaubes chemische Verbindungen aus diesen Inhaltsstoffen freisetzen, die ihrerseits die katalytischen Spezies in dem Prozessstaub deaktivieren.

Eine solche Wirkungsweise ist mit verhältnismäßig geringem Einsatz solcher Substanzen verbunden, darüber hinaus ist eine genaue Kenntnis der Zusammensetzung des Prozessstaubes nicht erforderlich.

Bei dem Verfahren gemäß der Erfindung werden dem Abgasstrom mit den Kohlenstoffsorbentien solche Substanzen beigegeben, die bei Anwesenheit von Alkalichloriden Katalysatorgifte für Metallkatalysatoren freisetzen. Die Erfindung nutzt dabei in vorteilhafter Art und Weise das in den Prozessstäuben vorhandene Chloridpotential, insbesondere das in Form der Alkalichloride, für die Katalysatordeaktivierung.

Wenn beispielsweise die mit den Sorbentien dem Abgasstrom zugegebenen Substanzen elementaren Schwefel umfassen, kommt es beispielsweise bei einer Temperatur von etwa 120°C im Abgasstrom zur Verflüssigung des Schwefels auf der Oberfläche der Kohlenstoffadsorbentien. Der Schwefel dringt teilweise in die Poren der Adsorbentien ein. Im Falle eines kritischen Temperaturanstieges, beispielsweise lokal in der Filterschicht oder in einer großvolumigen Staubablagerung, kommt es oberhalb von 250°C zur Verbrennung des Schwefels. Dabei entstehen Schwefeloxide, die mit den Alkalichloriden des Prozessstaubes so reagieren, dass die im Prozessstaub enthaltenen Metalloxide oder Spinelle in katalytisch inaktive Metallchloride überführt werden.

Auf diese Art und Weise wird das Selbstvergiftungspotential des Prozessstaubs zu dessen Inertisierung genutzt.

Ein ähnliches Ergebnis lässt sich beispielsweise mit Ammoniumsulfat anstelle von elementarem Schwefel erzielen.

Besonders vorteilhaft ist es, wenn die mit den Sorbentien dem Abgasstrom zugegebenen Substanzen Alkalichloride umfassen. Hier können bevorzugt Natriumchlorid oder Kaliumchlorid Anwendung finden. Solche Substanzen sind selbst keine Oxidationskatalysatoren und verhalten sich im Temperaturbereich von Flugstromanlagen inert. Durch Zugabe von Alkalichloriden kann die benötigte Menge an elementarem Schwefel verringert werden. Schwefel kann beispielsweise in der Menge zugegeben werden, die mindestens dem stöchiometrischen Verhältnis zur Bildung von Alkalisulfaten aus den Alkalichloriden entspricht.

Zweckmäßigerweise beträgt das Verhältnis von elementarem Schwefel zu den Sorbentien wenigstens 0,2 : 1, vorzugsweise wenigstens 0,25 : 1. Bei Zugabe von Alkalichloriden kann das Verhältnis von elementarem Schwefel zu den Sorbentien wenigstens 0,15 : 1 betragen.

Die Erfindung wird nachstehend anhand verschiedener Beispiele erläutert werden. Die Beispiele wurden unter Laborbedingungen durchgeführt. Stellvertretend für die im Prozessstaub vorhandenen katalytisch wirksamen Bestandteile wurde Pb₃O₄ verwendet. Als Alkalichloride wurden KCI sowie NaCl verwendet.

Die Veränderung der Mineralphasen der beteiligten Komponenten wurden für die ausgewählten Beispiele röntgenografisch kontrolliert. Die Reaktivität der untersuchten Mischungen wurde nach VDI 2263 (Brennzahl-Methode) gemessen. Die Brennzahl-Messung wurde unter Umgebungsbedingungen (20°C) an der kalten Probe vorgenommen. Hierbei wurde die prismatisch geformte Prüfschüttung des Staubgemischs mit einer glühenden Platinwendel zur Entzündung gebracht und die Art und Weise der Brandausbreitung durch Angabe einer Brennzahl charakterisiert. Die Brennzahl erhöht sich mit dem Koksanteil in der Prüfmischung. Bei einer Brennzahl von 4 breitet sich der initiierte Glimmbrand über die gesamte Prüfschüttung aus. Eine Brennzahl 3 ist durch ein örtliches Brennen oder Glimmen mit höchstens geringer Ausbreitung charakterisiert und wird daher als sicherheitstechnisch unbedenklich eingestuft. Die Brennzahl 2 kennzeichnet ein kurzes Entzünden und rasches Erlöschen der Prüfschüttung.

### Beispiel 1

Von Pb₃O₄ ist bekannt, dass diese Verbindung die Kohlenstoffoxidation stark katalysiert. Von einer Mischung aus 80 Gewichtsteilen pulverförmigen Pb₃O₄ und 20 Gewichtsteilen Braunkohlenkoksstaub wird die Brennzahl im Mittel zu 5 bestimmt. Das Ergebnis dokumentiert die hohe Entzündlichkeit einer solchen Mischung aus einem Oxidationskatalysator und dem verwendeten Koksstaub.

### Beispiel 2

Von einer Mischung aus 77 Gewichtsteilen pulverförmigem Pb₃O₄, 20 Gewichtsteilen Braunkohlenkoksstaub und 3 Gewichtsteilen Schwefel wird die Brennzahl im Mittel zu 4 bestimmt. Das Ergebnis dokumentiert, dass die Schwefelmenge nicht ausreicht, die Brennzahl unter 3 abzusenken.

Die röntgenografische Analyse ergab, dass sich mit zunehmender Temperatur verstärkt Bleisulfat bildet und sich der Anteil an Pb₃O₄ entsprechend verringert.

### Beispiel 3

Von einer Mischung aus 75 Gewichtsteilen pulverförmigem Pb₃O₄, 20 Gewichtsteilen Braunkohlenkoksstaub und 5 Gewichtsteilen Schwefelstaub wurde die Brennzahl im Mittel zu 3 bestimmt. Das Ergebnis dokumentiert, dass es ab einem Schwefel-Koks-Gewichtsverhältnis von 0,25 : 1 gelingt, die Brennzahl unter 3 abzusenken.

### Beispiel 4

Von einer Mischung aus 70 Gewichtsteilen pulverförmigem Pb₃O₄, 20 Gewichtsteilen Braunkohlenkoksstaub und 10 Gewichtsteilen pulverförmigem Kaliumchlorid wurde die Brennzahl im Mittel zu 4 bestimmt. Das Ergebnis dokumentiert, dass es durch alleinige Zugabe des Alkalichlorids nicht gelingt, die Brennzahl unter 3 abzusenken.

### Beispiel 5

Von einer Mischung aus 67 Gewichtsteilen Pb₃O₄, 20 Gewichtsteilen Braunkohlenkoksstaub, 3 Gewichtsteilen Schwefelstaub und 10 Gewichtsteilen pulverförmigem Kaliumchlorid wurde die Brennzahl im Mittel zu 2 bestimmt. Das Ergebnis dokumentiert, dass es durch Zugabe von Schwefel und Kaliumchlorid im ungefähren stöchiometrischen Verhältnis gelingt, die Brennzahl unter 3 abzusenken.

Die röntgenografische Analyse ergab, dass sich >200°C Bleichlorid (PbCl₂) bildet und die Anteile an Pb₃O₄ und KCl entsprechend zurückgehen.

### Beispiel 6

Von einer Mischung aus 67 Gewichtsteilen pulverförmigem Pb₃O_{4'}, 20 Gewichtsteilen Braunkohlenkoksstaub, 3 Gewichtsteilen Schwefelstaub und 10 Gewichtsteilen pulverförmigem Natriumchlorid wurde die Brennzahl im Mittel zu 3 bestimmt. Das Ergebnis dokumentiert, dass es durch Zugabe von Schwefel und Natriumchlorid im ungefähren stöchiometrischen Verhältnis gelingt, die Brennzahl signifikant abzusenken.

Die röntgenografische Analyse ergab, dass sich >200°C Bleichlorid (PbCl₂) bildet und die Anteile an Pb₃O₄ und NaCl entsprechend zurückgehen.

## Patentansprüche

1. Verfahren zur trockenen Reinigung von Abgasen aus metallurgischen oder sekundärmetallurgischen Prozessen, bei welchem pulverförmige Sorbentien umfassend Braunkohlenkoks und/oder Aktivkohle mit dem Abgasstrom in Kontakt gebracht werden, **dadurch gekennzeichnet, dass** dem Abgasstrom mit den Sorbentien Substanzen beigegeben werden, die oberhalb einer Temperatur von etwa 100°C bei Anwesenheit von Alkalichloriden Katalysatorgifte für Metallkatalysatoren freisetzen.

2. Verfahren nach ein Anspruch 1, **dadurch gekennzeichnet, dass** die mit den Sorbentien dem Abgasstrom zugegebenen Substanzen elementaren Schwefel umfassen.

3. Verfahren nach einem der Ansprüche 1 oder 2, **dadurch gekennzeichnet, dass** die mit den Sorbentien dem Abgasstrom zugegebenen Substanzen Alkalichloride umfassen.

4. Verfahren nach Anspruch 2, **dadurch gekennzeichnet, dass** das Verhältnis von elementarem Schwefel zu den Sorbentien wenigstens 0,2 : 1, vorzugsweise wenigstens 0,25 : 1 beträgt.

5. Verfahren nach Anspruch 3, **dadurch gekennzeichnet, dass** das Verhältnis von elementarem Schwefel zu den Sorbentien wenigstens 0,15 : 1 beträgt.

## Claims

1. Method for dry cleaning waste gases from metallurgical or secondary metallurgical processes, in which method powdery sorbents comprising brown coal coke and/or activated charcoal are brought into contact with the waste gas stream, **characterised in that** substances are added to the waste gas stream with the sorbents, which substances release catalyst poisons for metal catalysts above a temperature of approximately 100°C in the presence of alkali chlorides.

2. Method according to Claim 1, **characterised in that** the substances added with the sorbents to the waste gas stream comprise elementary sulfur.

3. Method according to one of Claims 1 and 2, **characterised in that** the substances added with the sorbents to the waste gas stream are alkali chlorides.

4. Method according to Claim 2, **characterised in that** the ratio of elementary sulfur to the sorbents is at least 0.2 : 1, preferably at least 0.25 : 1.

5. Method according to Claim 3, **characterised in that** the ratio of elementary sulfur to the sorbents is at least 0.15 : 1.

## Revendications

1. Procédé pour le nettoyage sec d'effluents gazeux provenant de processus métallurgiques ou métallurgiques secondaires, dans lequel des sorbants sous forme poudreuse comprenant de la coke de lignite et/ou du charbon actif sont mis en contact avec le flux d'effluents gazeux, **caractérisé en ce qu'**avec les sorbants, des substances qui libèrent des poisons du catalyseur pour des catalyseurs métalliques en présence de chlorures alcalins au-dessus d'une température d'environ 100 °C sont adjointes au flux d'effluents gazeux.

2. Procédé selon la revendication 1, **caractérisé en ce que** les substances adjointes au flux d'effluents gazeux avec les sorbants comprennent du soufre élémentaire.

3. Procédé selon l'une des revendications 1 ou 2, **caractérisé en ce que** les substances adjointes au flux d'effluents avec les sorbants comprennent des chlorures alcalins.

4. Procédé selon la revendication 2, **caractérisé en ce que** le rapport entre le soufre élémentaire et les sorbants s'élève au moins à 0,2 : 1, et de préférence au moins à 0,25 : 1.

5. Procédé selon la revendication 3, **caractérisé en ce que** le rapport entre le soufre élémentaire et les sorbants s'élève au moins à 0,15 : 1.
